(19) Europäisches Patentamt
European Patent Office
Office européen des brevets

(11) Veröffentlichungsnummer : **0 276 658 B1**

(12) # EUROPÄISCHE PATENTSCHRIFT

(45) Veröffentlichungstag der Patentschrift : **17.04.91 Patentblatt 91/16**

(51) Int. Cl.[5] : **C08F 226/00,** B01F 17/00, // (C08F226/00, 220:24)

(21) Anmeldenummer : **88100153.1**

(22) Anmeldetag : **08.01.88**

(54) **Copolymerisate aus N-Vinylamiden und Perfluoralkylgruppen enthaltenden ethylenisch ungesättigten Verbindungen, ein Verfahren zu ihrer Herstellung und ihre Verwendung.**

(30) Priorität : **20.01.87 DE 3701408**

(43) Veröffentlichungstag der Anmeldung : **03.08.88 Patentblatt 88/31**

(45) Bekanntmachung des Hinweises auf die Patenterteilung : **17.04.91 Patentblatt 91/16**

(84) Benannte Vertragsstaaten : **AT DE FR GB IT**

(56) Entgegenhaltungen :
**EP-A- 0 013 066**
**US-A- 3 474 079**

(73) Patentinhaber : **BAYER AG**
**W-5090 Leverkusen 1 Bayerwerk (DE)**

(72) Erfinder : **Ohst, Holger, Dr.**
**Klutstein 33**
**W-5060 Bergisch-Gladbach 2 (DE)**
Erfinder : **Podszun, Wolfgang, Dr.**
**Wolfskaul 4**
**W-5000 Köln 80 (DE)**
Erfinder : **Süling, Carlhans, Dr.**
**Carl Leverkus-Str. 10**
**W-5068 Odenthal (DE)**
Erfinder : **Goossens, John, Dipl.-Ing.**
**Hebbelstr. 5**
**W-5090 Leverkusen 1 (DE)**
Erfinder : **Penners, Günther, Dr.**
**Körner Str. 6**
**W-5090 Leverkusen 1 (DE)**

**EP 0 276 658 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Copolymerisate enthaltend 0,01 bis 35 Mol-%, bezogen auf die Gesamtmonomerzusammensetzung, eines oder mehrerer polymerisierter Perfluoralkylgruppen enthaltender Monomereinheiten, 55 bis 99, 99 Mol-% eines oder mehrerer polymerisierter N-Vinylamid-Monomereinheiten sowie 0 bis 10 Mol-% eines oder mehrerer weiterer Comonomerer, ein Verfahren zur Herstellung der Copolymerisate und ihre Verwendung als Emulgatoren und Dispergatoren in wässrigen Systemen.

Es ist bekannt, daß N-Vinylpyrrolidon nach üblichen Verfahren, z.B. in Lösung oder in Masse, bei 20 bis 80°C mit radikalisch wirkenden Initiatoren polymerisiert werden kann. Copolymere des N-Vinylpyrrolidons mit längerkettigen Olefinen oder mit Acryl- oder Methacrylestern sind ebenfalls bekannt (z.B. DE-OS 2 330 601). Sie finden als oberflächenaktive Polymere Anwendung. Auch Copolymere des N-Vinylpyrrolidons mit Vinylalkylethern sind bekannt [F. P. Sidel kovskaya, M. F. Zelinski, F. Ibraginov und M. A. Askarov ; Vysokomolek. Soedin 6, 1585-90 (1945)].

In der US-PS 3 474 079 sind Copolymerisate von N-Vinyllactamen und teilfluorierten ungesättigten Säureestern beschrieben, die zur Stockpunkterniedrigung von Erdöl, als Viskositätsverbesserer, zur Oberflächenbeschichtung und für die Papier- und Lederbehandlung verwendet werden können.

In der EP-OS 0 034 527 sind Terpolymerisate mit hohen Gehalten (35 bis 98%) an Perfluoralkylgruppenhaltigen Estern α, β-ungesättigter Carbonsäuren, N-Vinylpyrrolidonen und einem dritten Comonomeren als Oleophobier- und Hydrophobiermittel, insbesondere zur Papierbehandlung, beschrieben.

In der DE-OS 3 415 975 sind fluorhaltige Copolymerisate aus Vinylestern und fluorhaltigen Monomeren beschrieben. Diese liefern nach einer Verseifung wasserlösliche Copolymerisate, die als oberflächenaktive Substanzen wirksam sind. Diese Produkte haben jedoch nicht nur den Nachteil einer zweistufigen Synthese, sondern sie sind auch je nach Verseifungsgrad nicht über einen weiten pH-Bereich in wässriger Lösung hydrolysebeständig.

Es wurde nun gefunden, daß man in einem Reaktionsschritt Perfluoralkylgruppen enthaltende wasserlösliche Copolymerisate mit verbesserter Hydrolysebeständigkeit erhält, wenn man N-Vinylamide mit Perfluoralkylgruppen enthaltenden, ethylenisch ungesättigten Monomeren copolymerisiert, gegebenenfalls in Gegenwart weiterer Comonomere.

Gegenstand der Erfindung sind daher Copolymerisate, enthaltend 0,01 bis 35 Mol-%, bezogen auf die Gesamtmonomerzusammensetzung eines oder mehrerer polymerisierter Perfluoralkylgruppen enthaltender Monomereinheiten, 55 bis 99,99 Mol-% eines oder mehrerer polymerisierter N-Vinylamid-Monomereinheiten sowie 0 bis 10 Mol-% eines oder mehrerer polymerisierter weiterer Comonomerer.

Die erfindungsgemäßen Copolymerisate enthalten vorzugsweise 0,01 bis 20 Mol-% Perfluoralkylgruppen enthaltende polymerisierte Monomereinheiten.

Gegenstand der Erfindung ist weiterhin ein Verfahren zur Herstellung dieser Copolymerisate, das dadurch gekennzeichnet ist, 0,01 bis 35 Mol-%, bezogen auf die eingesetzte Gesamtmonomermenge, Perfluoralkylgruppen enthaltende ethylenisch ungesättigte Monomere, 55 bis 99,99 Mol-% N-Vinylamide und 0 bis 10 Mol-% weitere Comonomere radikalisch copolymerisiert werden.

Bevorzugt wird die erfindungsgemäße Copolymerisation in Lösung durchgeführt.

Gegenstand der Erfindung ist weiterhin die Verwendung dieser erfindungsgemäßen Perfluoralkylgruppen enthaltenden Copolymerisate als Emulgatoren, Schutzkolloide und Dispergatoren sowie zur Oberflächenmodifizierung von organischen und/oder anorganischen Substraten.

Die erfindungsgemäßen Copolymerisate sind lineare oder verzweigte, cyclische oder acyclische Perfluoralkylgruppen enthaltende ethylenisch ungesättigte Monomereinheiten der Formel (I)

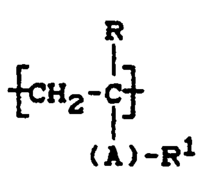

(I),

worin

R für Wasserstoff (H), $C_1$-$C_4$-Alkyl, vorzugsweise H, Methyl steht,

A. für –O–,

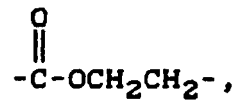,
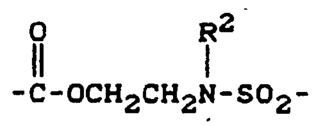

steht, wobei

$R^2$ für Wasserstoff (H), $C_1$-$C_{10}$-Alkyl, vorzugsweise für H, $CH_3$, $C_2H_5$, $C_3H_7$, $C_4H_9$, $C_5H_{11}$, $C_6H_{13}$ steht und

$R^1$ für $C_nF_{2n+1}$ steht, wobei n eine ganze Zahl von 4 bis 20, vorzugsweise 4 bis 12 bedeutet.

Als Beispiele für Monomere, die Struktureinheiten der Formel I liefern, seien genannt: Perfluorbutylvinylether Perfluoroctylvinylether, Perfluorbutylethylacrylat, Perfluoroctylethylmethacrylat, N-Methyl-N-perfluorbutylsulfonamidoethylacrylat, N-Methyl-N-perfluoroctylsulfonamidoethylmethacrylat, N-Ethyl-N-perfluoroctylsulfonamidoethylmethacrylat oder N-Propyl-N-perfluoroctylsulfonamidoethylacrylat. Mischungen von Perfluoralkylmonomeren können auch eingesetzt werden.

Die Synthese von Perfluoralkylgruppen enthaltenden Monomeren auf Acrylat- bzw. Methacrylat-Basis ist bekannt (z.B. FR-PS 20 34 142).

Besonders bevorzugte Monomere mit Perfluoralkylgruppen die der Formel (I) entsprechen sind N-Methyl-N-perfluoroctylsulfonamidoethylmethacrylat, Perfluoroctylvinylether und N-Methyl-N-perfluoroctylsulfonamidoethylacrylat.

Für die Copolymerisation eignen sich allgemein Vinylamide und für die erfindungsgemäßen Copolymerisate eignen sich besonders offenkettige und cyclische N-alkylierte N-Vinylamide. Vorzugsweise können cyclische N-Vinylamide mit Monomereinheiten der Formel II

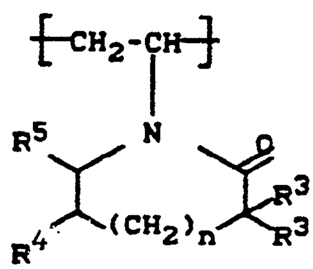 (II),

in welcher

n für die Zahl 0, 1 oder 2 steht und

$R^3$, $R^{3'}$, $R^4$ und $R^5$ unabhängig voneinander für Wasserstoff (H) oder für $C_1$-$C_4$-Alkylgruppen stehen, Verwendung finden.

Als offenkettige Vinylamide eignen sich vorzugsweise Vinylamide die Monomereinheiten der Formel III

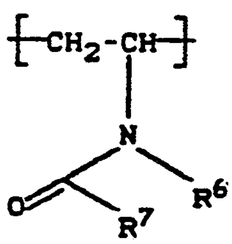 (III),

in welcher

$R^6$ und $R^7$ unabhängig voneinander für $C_1$-$C_4$-Alkylgruppen stehen oder in der $R_6$ für H und $R_7$ für $C_1$-$C_4$-Alkylgruppen stehen, enthalten.

Als Beispiele für cyclische N-Vinylamide seien genannt N-Vinylpyrrolidon, N-Vinylpiperidon, N-Vinylcaprolactam.

Als Beispiele für offenkettige N-Vinylamide seien die N-Methyl-N-vinylamide der Essigsäure, Propionsäure oder Buttersäure genannt oder Vinylformamid bzw. Vinylacetamid. Besonders bevorzugt sind N-Methyl-N-vinylacetamid, N-Vinylpyrrolidon und N-Vinylcaprolactam und Mischungen der N-Vinylamide.

Geeignet als weitere Comonomere sind z.B. ethylenisch ungesättigte Monomere, die mit den Perfluoralkylgruppen enthaltenden Comonomereinheiten und N-Vinylamiden copolymerisieren können, z.B. Butadien, Isopren, Chloropren, Styrol, α-Methylstyrol, p-Methylstyrol, Vinylhalogenide wie Vinylchlorid, Vinylidenchlorid, Vinylidenfluorid, Vinylester wie Vinylacetat, Vinylpropionat, Vinylstearat, Vinylmethylketon, Acrylsäure, Methacrylsäure, Maleinsäureanhydrid, Acrylsäureester oder Methacrylsäureester wie Methylacrylat, Methylmethacrylat, Ethylacrylat, Ethylmethacrylat, Propylacrylat, Laurylacrylat oder -methacrylat, Decylacrylat, N,N-Dimethylaminoethylmethacrylat, 2-Hydroxyethylmethacrylat, 2-Hydroxypropylmethacrylat, Glycidylmethacrylat, Amide und Nitrile wie Acrylamid, Methacrylamid, N-Methylolacrylamid, Acrylnitril, Methacrylnitril oder N-substituierte Maleinimide, Ether wie Vinylbutylether, Vinylisobutylether oder Vinylphenylether. Geeignet sind auch Mischungen dieser Comonomeren.

Diese Comonomeren können in Mengen von 0 bis 10 Mol-%, bezogen auf die Gesamtmonomermenge bei der Copolymerisation verwendet werden.

Die erfindungsgemäßen Copolymerisate werden z.B. erhalten durch Copolymerisation von Perfluoralkylgruppen enthaltenden Monomeren und N-Vinylamiden sowie gegebenenfalls weiteren Comonomeren in der Masse oder in Emulsion oder Suspension, bevorzugt in Lösung, mit üblichen zur radikalischen Polymerisation geeigneten Initiatoren. Es kann im Batch- oder Zudosierverfahren gearbeitet werden. Der Anteil an Perfluoralkylgruppen enthaltenden ethylenisch ungesättigten Monomereinheiten beträgt 0,01 bis 35 Mol-%, der Anteil an N-Vinylamiden 55 bis 99,99 Mol-% und der Anteil weiterer Comonomere 0 bis 10 Mol-%.

Vorzugsweise werden 0,01 bis 20 Mol-%, bezogen auf die Gesamtmonomermenge, an Perfluoralkylgruppen enthaltenden ethylenisch ungesättigten Monomeren, 70 bis 99,99 Mol-% an N-Vinylamiden und 0 bis 10 Mol-% an weiterern Comonomeren in einem organischen Lösungsmittel zusammen mit dem radikalischen Initiator gelöst und bei 60-80°C 2 bis 20 Stunden auf übliche Weise polymerisiert.

Als Polymerisationsinitiatoren können z.B. übliche organische Peroxide wie Benzoylperoxid, t-Butylhydroperoxid, Cumolhydroperoxid, Dibenzoylperoxid, Azo-Verbindungen wie Azo-di-isobutyrlonitril, sowie Perester, wie t-Butyl-per-2-ethylhexanoat, in einer Menge von 0,5 bis 5 Mol-%, bezogen auf Gesamtmonomermenge, vorzugsweise 1 bis 3 Mol-%, besonders bevorzugt 2 bis 2,5 Mol-%, eingesetzt werden. Auch die Verwendung von Persulfaten als Polymerisationsstarter ist möglich. Um die Polymerisation bei niedrigen Temperaturen zu starten, können Redoxsysteme auf Basis von Perverbindungen und Aminen oder auf Basis von Pesulfaten und Verbindungen des vierwertigen Schwefels verwendet werden.

Als organische Lösungsmittel können primäre, sekundäre oder tertiäre aliphatische Alkohole, wie z.B. Methanol, Ethanol, Isopropanol oder tert. Butanol, bevorzugt Methanol und tert. Butanol, besonders bevorzugt tert. Butanol, eingesetzt werden, in einer Menge, daß die Gesamtmonomerkonzentration im Bereich von 0,1 bis 2,0 mol/l, bevorzugt 0,6 bis 1,2 mol/l, liegt. Selbstverständlich ist es möglich, im wäßrigen Medium zu polymerisieren oder in Wasser/Lösungsmittelgemischen.

Die erfindungsgemäß hergestellten Copolymerisate können nach Entfernung des Lösungsmittels durch bekannte Trocknungsprozesse, in fester Form, vorzugsweise als Pulver, erhalten werden. Es kann auch vorteilhaft sein, nach erfolgter Polymerisation das Lösungsmittel nur teilweise zu entfernen und das Polymere durch Zufügen eines unpolaren Lösungsmittels, z.B. Hexan, auszufällen.

Die erfindungsgemäßen Perfluoralkylgruppen enthaltenden Copolymerisate können wasserlöslich, wasserquellbar oder wasserunlöslich sein, je nach Gehalt der einzelnen Comonomereinheiten im Copolymerisat.

Die erfindungsgemäßen Perfluoralkylgruppen enthaltenden Copolymerisate können Verwendung finden als Emulgatoren, Schutzkolloide und Dispergatoren. Auch zur Oberflächenmodifizierung von organischen und/oder anorganischen Substraten können die erfindungsgemäßen Copolymerisate verwendet werden.

Bezüglich des Eigenschaftsspektrums der erfindungsgemäßen Perfluoralkylgruppen enthaltenden Copolymerisate wurde überraschenderweise gefunden, daß solche mit Comonomereinheiten, die perfluorierte, gesättigte aliphatische, lineare oder verzweigte Reste mit 1 bis 20, vorzugsweise 1 bis 12, insbesondere 6 bis 8 C-Atome enthalten, hervorragende Dispergier- und Emulgiereigenschaften aufweisen.

Dispergierversuche mit wässrigen hydrophilen Siliziumoxyd ($SiO_2$)-Dispersionen und $SiO_2$-Dispersionen, worin die Teilchen mit einem organischen Silan hydrophobisiert wurden, zeigen, daß erfindungsgemäße Copolymerisate hydrophile als auch hydrophobe Oberflächen gleichermaßen gut stabilisieren.

Zu diesem Zweck wurden sowohl hydrophile, als auch hydrophobe Teilchen enthaltende, mit den erfindungsgemäßen Copolymerisaten stabilisierte $SiO_2$ Dispersionen hergestellt, und die Abnahme der Dispersionsturbidität als Folge von Aggregation und Sedimentation als Stabilitätsmaß beobachtet. Als Vergleich dienten Dispersionen ohne Polymer (Blindwert). Die Dispersionen enthielten 0,2 Gew.-% $SiO_2$, 0,05 Gew.-% des Polymers und 0,5 M NaCl (elektrostatische Abstoßung zwischen den $SiO_2$ Teilchen).

Zusätzlich wurden Vergleichsdispersionen hergestellt, wobei als Schutzkolloid ein N-Vinylpyrrolidon-Homopolymerisat mit vergleichbarem Molekulargewicht eingesetzt wurde. Im Vergleich hierzu zeigten die erfindungsgemäßen Copolymerisate eine deutlich bessere stabilisierende Wirkung.

Die Emulgiereigenschaften der erfindungsgemäßen Copolymerisate wurde in Öl-in-Wasser-Emulsionen

verschiedener nicht- bzw. teillöslicher organischer Flüssigkeiten aus der Gruppe der aromatischen Kohlenwasserstoffe (z.B. Toluol), der aliphatischen Kohlenwasserstoffe (z.B. Isododekan), der Amine (z.B. Diäthylanilin) und der Ester (z.B. n-Butylacetat) untersucht und das Auftreten bzw. Wandern der Phasengrenze in einem geschlossenen Glaszylinder in Abhängigkeit von der Zeit beobachtet. Die Emulsionen enthielten 60 Vol.-% Wasser und 2 Gew.-% der erfindungsgemäßen Copolymerisate, bezogen auf die wäßrige Phase.

Als Vergleichsproben dienten Emulsionen, hergestellt mit einem N-Vinylpyrrolidon-Homopolymerisat mit vergleichbarem Molekulargewicht, als Emulgator bzw. Schutzkolloid. Bei vergleichbaren Molekulargewichten und Lösungsviskositäten hatte die Anwendung der erfindungsgemäßen Perfluoralkylgruppen enthaltenden Copolymerisate schon bei geringen Anteilen an den genannten Comonomereinheiten deutlich stabilere Emulsionen zur Folge.

## Beispiele

### Beispiel 1

Herstellung eines N-Vinylpyrrolidon-Copolymerisats

In einem Rührkolben mit Rührer, Thermometer und Rückflußkühler werden unter Stickstoff als Schutzgas 26,6 g (0,24 Mol) N-Vinylpyrrolidon, 4,9 g (0,008 mol) N-Methyl-N-perfluoroctylsulfonamidoethylmethacrylat, 230,0 g tert. Butanol und 1,0 g Azo-di-isobutyronitril vorgelegt. Die Reaktionsmischung wird auf 70°C aufgeheizt. Nach einer Polymerisationsdauer von 16 Stunden wird eine Destillation unter vermindertem Druck zur Befreiung der Reaktionslösung von monomerem N-Vinylpyrrolidon angeschlossen. Der Rückstand wird mit Hexan gewaschen und anschließend bei 50°C getrocknet. Man isoliert 25,0 g Copolymerisat.

Man erhält ein Copolymerisat mit einer reduzierten spezifischen Viskosität von 18 ml/g, gemessen an einer 1-%igen Lösung des Copolymerisats bei 30°C in Methanol.

Elementaranalytische Zusammensetzung des Copolymerisates : C : 57,1%, H : 8,0%, N : 9,7% und F : 6,7%.

### Beispiel 2

Herstellung eines N-Methyl-N-vinylacetamid-Copolymerisates

In einem Rührkolben mit Rührer, Thermometer und Rückflußkühler werden unter Stickstoff als Schutzgas 24,8 g (0,25 Mol) N-Methyl-N-vinylacetamid und 2,5 g (0,004 Mol) N-Methyl-N-perfluoroctylsulfonamidoethylmethacrylat, 230,0 g tert. Butanol und 1,0 g Azo-di-isobutyronitril vorgelegt. Die Reaktionsmischung wird auf 72°C aufgeheizt. Während der Polymerisation trübt sich die Reaktionsmischung durch sich abscheidendes Polymer. Nach einer Polymerisationsdauer von 16 Stunden wird eine Destillation unter vermindertem Druck zur Befreiung der Reaktionslösung von monomerem N-Methyl-N-vinylacetamid angeschlossen. Der Rückstand wird mit Hexan ausgewaschen. Nach Trocknen bei 50°C verbleiben 21,8 g Copolymerisat mit einer reduzierten spezifischen Viskosität von 12 ml/g, gemessen an einer 1-%igen Lösung des Copolymerisats bei 30°C in Methanol.

Elementaranalytische Zusammensetzung des Copolymerisates : C : 57,0%, H : 9,4%, N : 10,7% und F : 4,6%.

### Beispiel 3

In je einem Rührkolben mit Rührer, Thermometer und Rückflußkühler werden folgende Lösungen bereitet:

| | |
|---|---|
| a) 27,8 g (0,250 Mol) | N-Vinylpyrrolidon |
| 1,2 g | N-Methyl-N-perfluoroctylsulfonamidoethylacrylat |
| 230,0 g | tert. Butanol |
| 1,0 g | Azo-di-isobutyronitril |
| b) 27,2 g (0,245 Mol) | N-Vinylpyrrolidon |
| 2,5 g (0,004 Mol) | N-Methyl-N-perfluoroctylsulfonamidoethylacrylat |
| 230,0 g | tert. Butanol |
| 1,0 g | Azo-di-isobutyronitril |
| c) 26,6 g (0,240 Mol) | N-Vinylpyrrolidon |
| 4,9 g (0,008 Mol) | N-Methyl-N-perfluoroctylsulfonamidoethylacrylat |
| 230,0 g | tert. Butanol |

1,0 g Azo-di-isobutyronitril

Alle drei Lösungen werden auf 72°C aufgeheizt und 16 Stunden lang polymerisiert. Anschließend werden die Lösungen unter vermindertem Druck zur Entfernung von monomeren N-Vinylpyrrolidon destilliert. Der aufkonzentrierte Rückstand wird mehrmals mit Hexan gewaschen und anschließend bei 50°C getrocknet.

Man erhält im einzelnen a) 25,9 g, b) 25,8 g und c) 26,7 g Copolymerisat.

Die Charakterisierung der Copolymerisate liefert im einzelnen folgende Werte :

| | a) | b) | c) |
|---|---|---|---|
| spezifische reduzierte Viskosität gemessen an einer 1-%igen Lösung in Methanol bei 30° C | 21 ml/g | 26 ml/g | 25 ml/g |
| Elementaranalytische Zusammensetzung: | | | |
| C | 59,8 % | 59,3 % | 57,8 % |
| H | 8,6 % | 8,3 % | 7,7 % |
| N | 10,7 % | 10,3 % | 9,4 % |
| F | 1,8 % | 3,5 % | 6,3 % |

Beispiel 4

Herstellung eines Terpolymerisats

In einem Rührkolben mit Rührer, Thermometer und Rückflußkühler werden unter Stickstoff als Schutzgas 13,9 g (0,125 Mol) N-Vinylpyrrolidon, 17,4 g (0,125 Mol) N-Vinylcaprolactam, 6,3 g (0,01 Mol) N-Methyl-N-perfluoroctylsulfonamidoethylmethacrylat, 230,0 g tert. Butanol und 1,0 g Azo-diisobutyronitril vorgelegt.

Anschließend wird, wie in Beispiel 1 beschrieben, weiter verfahren. Man erhält 23,2 g Copolymerisat mit einer reduzierten spezifischen Viskosität von 20 ml/g, gemessen an einer 1-%igen Lösung des Copolymerisats bei 30°C in Methanol.

Elementaranalytische Zusammensetzung des Copolymerisates : C : 58,8%, H : 8,2%, N : 9,6% und F : 6,3%.

Beispiel 5

Herstellung eines Terpolymerisates

In einem Rührkolben mit Rührer, Thermometer und Rückflußkühler werden unter Stickstoff als Schutzgas 25,5 g (0,23 Mol) N-Vinylpyrrolidon, 1,0 g (0,01 Mol) Methylmethacrylat, 6,1 g (0,01 Mol) N-Methyl-N-perfluoroctylsulfonamidoethylacrylat, 230,0 g tert. Butanol und 1,0 g Azo-di-isobutyronitril vorgelegt. Anschließend

wird, wie in Beispiel 1 beschrieben, weiter verfahren.

Man erhält 24,3 g Copolymerisat mit einer reduzierten spezifischen Viskosität von 19 ml/g gemessen an einer 1-%igen Lösung des Copolymerisates bei 30°C in Methanol.

Elementaranalytische Zusammensetzung des Copolymerisates : C : 63,8%, H : 7,9%, N : 11,8% und F : 1,3%.

Vergleichsbeispiel 1

Herstellung eines N-Vinylpyrrolidon-Homopolymerisates

In einer Polymerisationsapparatur entsprechend Beispiel 1 werden 27,8 g (0,25 Mol) N-Vinylpyrrolidon, 230,0 g tert. Butanol und 1,0 g Azo-di-isobutyronitril vorgelegt. Die Reaktionsmischung wird auf 72°C aufgeheizt. Nach einer Polymerisationsdauer von 16 Stunden wird die Polymerisationsreaktion durch Zugabe von Hydrochinon abgestoppt und aus dem Gemisch werden am Rotationsverdampfer bei 50°C und 200 mbar etwa 200 g Destillat entfernt.

Aus dem viskosen Rückstand wird das Poly-(N-vinylpyrrolidon) durch Zugabe von 300 g Hexan ausgefällt, isoliert und bei 50°C getrocknet.

Man erhält 23,0 g Poly-(N-vinylpyrrolidon) mit einer reduzierten spezifischen Viskosität von 25 ml/g, gemessen an einer 1-%igen Lösung des Copolymerisates bei 30°C in Methanol.

Beispiel 6

Bestimmung der Emulgiereigenschaften eines Perfluoralkylgruppen enthaltenden N-Vinylpyrrolidon-Copolymerisates

In einem 50 ml-Becherglas wurden 8 ml Isododecan und 12 ml einer 2 Gew.-%igen wäßrigen Lösung (pH = 7) eines Copolymerisates aus copolymerisiertem N-Vinylpyrrolidon und N-Methyl-N-perfluoroctylsulfonamidoethylmethacrylat (mit einer reduzierten spezifischen Viskosität von 19 ml/g in Methanol bei 30°C und einem Anteil an Perfluoralkylgruppen enthaltenden Monomereinheiten von 5 Mol-%) vorgelegt. Mit einem Rotastator wurden die organische und wäßrige Phase 2 Minuten lang mit 10.000 U/Min. und 22°C homogenisiert, 9 g der entstandenen Öl-in-Wasser-Emulsion in ein Reagenzglas gefüllt und das Wandern der Phasengrenze in Abhängigkeit von der Zeit gemessen. Als weiteres Maß für die Emulgierfähigkeit des Copolymerisates wurde die Stabilität der aufgerahmten Emulsion nach 3 Wochen Standzeit beurteilt, wobei Farbänderung des Rahms bzw. die Bildung einer unterscheidbaren Isododecan-Phase als Instabilität gedeutet wurde.

Die anfängliche Rahmgeschwindigkeit der Emulsion lag bei 1,7 mm pro Stunde. Dieser Wert änderte sich nicht, wenn nach einem Tag die Emulsion vorsichtig aufgeschüttelt und für eine neue Messung verwendet wurde. Die Emulsion trennt sich im Laufe der Zeit als Folge des Dichteunterschiedes zwischen Isododecan-Tröpfchen und der kontinuierlichen Phase in eine konzentrierte weiße Oberschicht (Rahm) und eine davon scharf abgegrenzte milchig-trübe wäßrige Phase. Nach einem Tag Standzeit betrug das Rahmvolumen 59% des totalen Flüssigkeitsvolumens. Dieser Wert bleibt über mehrere Wochen konstant. Auch nach 3 Wochen Standzeit konnte kein Anzeichen für Koaleszenz der Emulsionströpfchen (glasig werden der Rahmschicht oder Entstehen einer Isododecanschicht auf dem Rahm) wahrgenommen werden.

Beispiel 7

Bestimmung der Emulgiereigenschaften eines Perfluoralkylgruppen enthaltenden N-Vinylpyrrolidon-Copolymerisates

Ein Copolymerisat, bestehend aus N-Vinylpyrrolidon- und N-Methyl-N-perfluoroctylsulfonamidoethylmethacrylat-Monomereinheiten (mit einer reduzierten spezifischen Viskosität von 38 ml/g in Methanol bei 30°C und einem Anteil an Perfluoroalkylgruppen enthaltenden Monomereinheiten von 1 Mol-%), diente als Emulgator zur Herstellung einer Diethylanilin-in-Wasser-Emulsion gemäß der in Beispiel 6 beschriebenen Art und Weise. Die Rahmgeschwindigkeit dieser Emulsion betrug 1,1 mm pro Stunde. Nach zwei Tagen betrug das Rahmvolumen 62% des totalen Flüssigkeitsvolumens. Dieser Wert blieb über mehrere Wochen gleich. Auch nach 3 Wochen Standzeit konnte keine Koaleszenz der Emulsion wahrgenommen werden.

Vergleichsbeispiel 2

Zum Vergleich wurden nach der in Beispiel 6 beschriebenen Art und Weise Isododecan-in-Wasser-Emulsionen mit dem in Vergleichsbeispiel 1 beschriebenen N-Vinylpyrrolidon-Homopolymerisaten als Emulgator hergestellt. Die anfängliche Rahmgeschwindigkeit dieser Emulsion betrug 5,7 mm/Min. Schon einige Stunden nach der Herstellung trennte sich eine klare Isododecan-Schicht von der Emulsion ab. Nach einem Tag Standzeit war die Rahmschicht bis auf eine dünne, glasige Zwischenschicht vollständig koalesziert.

Beispiel 8

Stabilisierung einer Siliciumdioxid-Dispersion mittels eines Perfluoralkylgruppen enthaltenden N-Vinylpyrrolidon-Copolymerisates

In drei 1 × 1 cm-Küvetten wurden je 100 µl einer 2 Gew.-%igen wäßrigen Lösung eines N-Vinylpyrrolidon-N-Methyl-N-perfluoroctylsulfonamidoethylmethacrylat-Copolymerisates (mit einer reduzierten spezifischen Viskosität von 18 ml/g in Methanol bei 30°C und einem Anteil an Perfluoralkylgruppen enthaltenden Monomereinheiten von 3 Mol-%) und je 3,86 ml 0,5 M NaCl-Lösung vorgelegt. Danach wurden je 0,44 µl einer 18 Gew.-%igen wäßrigen Dispersion hydrophilen Siliciumdioxids hinzugegeben, homogenisiert und die Turbiditäten der einzelnen Dispersionen nach 2 Stunden Standzeit gemessen. Der Mittelwert betrug 0,75 ( ± 0,01).

Zusätzlich wurden auf die beschriebene Art und Weise 3 mit dem Vergleichsbeispiel 1 beschriebenen N-Vinylpyrrolidon-Homopolymerisat stabilisierte Dispersionen des hydrophilen Siliziumdioxids hergestellt und vermessen. Der mittlere Turbiditätswert dieser Dispersion betrug nach 2 Stunden Standzeit 0,58 ± 0,01.

Zum Vergleich : Messungen an stabilen (NaCl-freien) bzw. nicht stabilen (0,5 M NaCl enthaltenden) Dispersionen hydrophilen Siliziumdioxids gleicher Konzentration ohne Polymerzusatz ergaben Turbiditäten von 0,78 ± 0,01 bzw. 0,27 ± 0,01.

Beispiel 9

Stabilisierung einer Siliziumdioxid-Dispersion mittels eines Perfluoralkylgruppen enthaltenden N-Vinylpyrrolidon-Copolymerisates

In drei 1 × 1 cm-Küvetten wurden je 100 µl einer 2 Gew.-%igen wäßrigen Lösung einer N-Vinylpyrrolidon-N-Methyl-N-perfluoroctylsulfonamidoethylmethacrylat-Copolymerisates (mit einer reduzierten spezifischen Viskosität von 38 ml/g in Methanol bei 30°C und einem Anteil an Perfluoralkylgruppen enthaltenden Monomereinheiten von 1 Mol-%) und je 3,86 ml 0,5 M NaCl-Lösung vorgelegt. Danach wurden je 0,44 µl einer 18 Gew.-%igen Dispersion hydrophobisierten Siliziumdioxids in Methanol hinzugegeben, homogenisiert und die Turbiditäten der einzelnen Dispersionen nach 2 Stunden Standzeit gemessen. Der Mittelwert betrug 0,62 ± 0,01.

## Ansprüche

1. Copolymerisate, enthaltend 0,01 bis 35 Mol-%, bezogen auf die Gesamtmonomerzusammensetzung einer oder mehrerer polymerisierter Perfluoralkylgruppen enthaltender Monomereinheiten, 55 bis 99,99 Mol-% eines oder mehrerer polymerisierter N-Vinylamid-Monomereinheiten sowie 0 bis 10 Mol-% eines oder mehrerer weiterer Comonomerer.

2. Copolymerisate nach Anspruch 1, dadurch gekennzeichnet, daß die polymerisierten Perfluoralkylgruppen enthaltenden Monomereinheiten gesättigte, perfluorierte aliphatische Alkylgruppen, die linear oder verzweigt, cyclisch oder acyclisch sind, enthalten und der Formel I

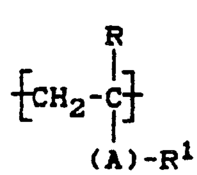

(I),

worin

R für Wasserstoff oder $C_1$-$C_4$-Alkyl steht,

A für –O–,

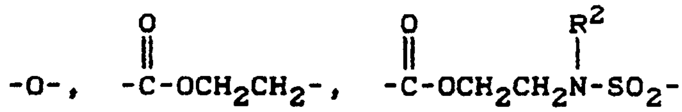

steht, wobei

$R^2$ für Wasserstoff oder $C_1$-$C_{10}$-Alkyl steht und

$R^1$ für $C_nF_{2n+1}$, wobei n eine ganze Zahl von 4 bis 20, bevorzugt 4 bis 12 bedeutet, steht entsprechen.

3. Copolymerisate nach Anspruch 1, dadurch gekennzeichnet, daß die polymerisierten cyclischen N-Vinylamid-Monomereinheiten der Formel II

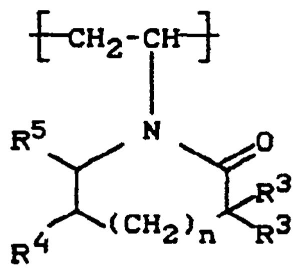

(II),

in welcher

n für die Zahl 0, 1 oder 2 steht und

$R^3$, $R^{3'}$, $R^4$ und $R^5$ unabhängig voneinander für ein Wasserstoffatom (H) oder für $C_1$-$C_4$-Alkylgruppen stehen, entsprechen und die offenkettigen der Formel III

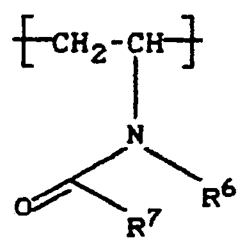

(III),

in welcher

$R^6$ und $R^7$ unabhängig voneinander für $C_1$-$C_4$-Alkylgruppen stehen, entsprechen.

4. Copolymerisate nach Anspruch 1, dadurch gekennzeichnet, daß die Copolymerisate 0,01 bis 20 Mol-% einer oder mehrerer polymerisierter Perfluoralkylgruppen enthaltender Monomereinheiten enthalten.

5. Verfahren zur Herstellung von Copolymerisaten nach Anspruch 1, dadurch gekennzeichnet, daß zur radikalisch initiierten Copolymerisation 0,01 bis 35 Mol-% bezogen auf die eingesetzte Gesamtmonomermenge Perfluoralkylgruppen enthaltende ethylenisch ungesättigte Monomere eingesetzt werden.

6. Verfahren zur Herstellung von Copolymerisaten nach Anspruch 1, dadurch gekennzeichnet, daß die Copolymerisation in Lösung durchgeführt wird.

7. Verwendung der Copolymerisate nach Anspruch 1 als Emulgatoren, Schutzkolloide und Dispergatoren sowie zur Oberflächenmodifizierung von organischen und/oder anorganischen Substraten..

8. Verwendung der Copolymerisate nach Anspruch 1 zur Stabilisierung von wässrigen Dispersionen anorganischer Oxide.

**Claims**

1. Copolymers containing from 0.01 to 35 mol-%, based on the total monomer composition, of one or more polymerized monomer units containing perfluoroalkyl groups, from 55 to 99.99 mol-% of one or more polymerized N-vinylamide monomer units, and from 0 to 10 mol-% of one or more further comonomers.

2. Copolymers according to Claim 1, characterized in that the polymerized monomer units containing perfluoroalkyl groups contain saturated, perfluorinated, aliphatic alkyl groups, which are linear or branched, cyclic or acyclic, and conform to the formula I

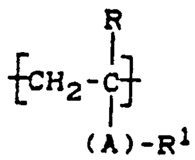

(I),

in which

R represents hydrogen or $C_1$-$C_4$-alkyl,

A represents

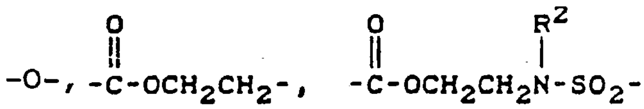

where

$R^2$ represents hydrogen or $C_1$-$C_{10}$-alkyl, and

$R^1$ represents $C_nF_{2n+1}$, where n denotes an integer from 4 to 20, preferably from 4 to 12.

3. Copolymers according to Claim 1, characterized in that the polymerized cyclic N-vinylamide monomer units conform to the formula II

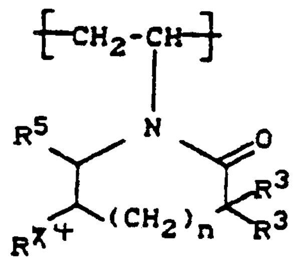

(II),

in which

n represents the number 0, 1 or 2, and

$R^3$, $R^{3'}$, $R^4$ and $R^5$, independently of one another, represent a hydrogen atom (H) or $C_1$-$C_4$-alkyl groups, and the open-chain N-vinylamide monomer units conform to the formula III

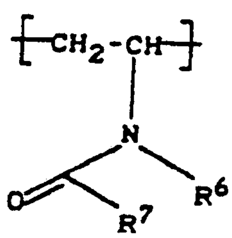

(III),

in which

$R^6$ and $R^7$, independently of one another, represent $C_1$-$C_4$-alkyl groups.

4. Copolymers according to Claim 1, characterized in that the copolymers contain from 0. 01 to 20 mol-% of one or more polymerized monomer units containing perfluoroalkyl groups.

5. Process for the preparation of copolymers according to Claim 1, characterized in that, for the copolymerization initiated by free radicals, from 0.01 to 35 mol-%, based on the total amount of monomers employed, of ethylenically unsaturated monomers containing perfluoroalkyl groups are employed.

6. Process for the preparation of copolymers according to Claim 1, characterized in that the copolymerization is carried out in solution.

7. Use of the copolymers according to Claim 1 as emulsifiers, protective colloids and dispersants and for the surface modification of organic and/or inorganic substrates.

8. Use of the copolymers according to Claim 1 for stabilizing aqueous dispersions of inorganic oxides.

## Revendications

1. Copolymères contenant de 0,01 à 35 mol%, par rapport aux monomères totaux, d'un ou plusieurs motifs monomères contenant des groupes perfluoralkyle à l'état polymérisé, de 55 à 99,99 mol% d'un ou plusieurs motifs monomères de N-vinylamides à l'état polymérisé et de 0 à 10 mol% d'un ou plusieurs autres comonomères.

2. Copolymères selon la revendication 1, caractérisés en ce que les motifs monomères à groupes perfluoralkyle et à l'état polymérisé contiennent des groupes alkyle aliphatiques satures perfluorés, linéaires ou ramifiés, cycliques ou acycliques, qui répondent à a formule I

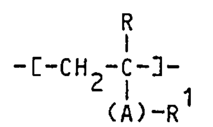

(I),

dans laquelle

R représente l'hydrogène ou un groupe alkyle en $C_1$-$C_4$,

A représente

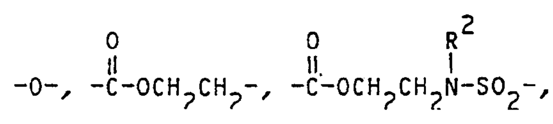

dans lesquels

$R^2$ représente l'hydrogène ou un groupe alkyle en $C_1$-$C_{10}$ et

$R^1$ représente un groupe $C_nF_{2n+1}$, dans lequel n est un nombre entier de 4 à 20, de préférence de 4 à 12.

3. Copolymères selon la revendication 1, caractérisés en ce que les motifs monomères de N-vinylamides cycliques polymérisés répondent a la formule II

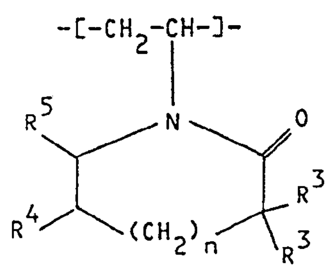

(II),

dans laquelle

n est égal à 0, 1 ou 2 et

$R^3$, $R^{3'}$, $R^4$ et $R^5$ représentent chacun, indépendamment les uns des autres, un atome d'hydrogène (H) ou un groupe alkyle en $C_1$-$C_4$, et les motifs acycliques répondent à la formule III

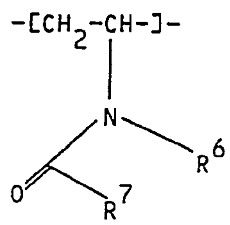

(III),

dans laquelle

$R^6$ et $R^7$ représentent chacun, indépendamment l'un de l'autre, un groupe alkyle en $C_1$-$C_4$.

4. Copolymères selon la revendication 1, caractérisés en ce qu'ils contiennent de 0,01 à 20 mol% d'un ou plusieurs motifs monomères contenant des groupes perfluoralkyle à l'état polymérisé.

5. Procédé de préparation des copolymères selon la revendication 1, caractérisé en ce que, pour la copolymérisation déclenchée par un inducteur radicalaire, on met en oeuvre de 0,01 à 35 mol%, par rapport aux monomères totaux mis en oeuvre, de monomères à insaturation éthylénique contenant des groupes perfluoralkyle.

6. Procédé de préparation des copolymères selon la revendication 1, caractérisé en ce que la copolymérisation est effectuée en solution.

7. Utilisation des copolymères selon la revendication 1 en tant qu'agents émulsionnants, colloïdes protecteurs et agents dispersants ou pour la modification de surface de substrats organiques et/ou minéraux.

8. Utilisation des copolymères selon la revendication 1 pour la stabilisation des dispersions aqueuses d'oxydes minéraux.